# EUROPÄISCHE PATENTSCHRIFT

(11) **EP 2 917 060 B1**
(45) Veröffentlichungstag und Bekanntmachung des Hinweises auf die Patenterteilung: **21.09.2016**
(21) Anmeldenummer: 13789192.5
(22) Anmeldetag: 11.11.2013
(51) Int. Cl.: B60K 17/22, F16D 3/223, F16D 11/10, F16D 47/02

(54) **ANTRIEBSANORDNUNG FÜR EINEN ANTRIEBSSTRANG**
DRIVE ARRANGEMENT FOR A DRIVETRAIN
DISPOSITIF DE TRANSMISSION POUR CHAINE CINÉMATIQUE

(30) Priorität: 12.11.2012 DE 102012022011
(43) Veröffentlichungstag der Anmeldung: 16.09.2015
(73) Patentinhaber: Amtek Tekfor Holding GmbH, 77652 Offenburg (DE); Bayerische Motoren Werke Aktiengesellschaft, 80809 München (DE)
(72) Erfinder: SZENTMIHÁLYI, Volker, 77793 Gutach (DE); EBERT, Alexander, 77704 Oberkirch (DE); ETZOLD, Thomas, 77654 Offenburg (DE); LEHMANN, Martin, 78132 Hornberg (DE); HERTTER, Tobias, 81247 Muenchen (DE); HOMBAUER, Michael, 85630 Harthausen (DE)
(74) Vertreter: Wallinger, Michael
(86) Internationale Anmeldenummer: PCT/EP2013/003385
(87) Internationale Veröffentlichungsnummer: WO 2014/072069

(56) Entgegenhaltungen:
- WO-A1-02/14092
- DE-A1- 3 234 456
- DE-A1-102011 106 355
- GB-A- 2 255 380

## Beschreibung

Die Erfindung betrifft eine Antriebsanordnung für einen Antriebsstrang eines Fahrzeugs.

Der Antriebsstrang eines Fahrzeugs dient generell dazu, die Kraft und das Drehmoment wenigstens eines Motors auf die Räder des Fahrzeugs zu übertragen. Dabei gibt es Fahrzeuge, bei denen beide Querachsen angetrieben werden, sogenannte Allradfahrzeuge. Bei den meisten Fahrzeugen wird jedoch nur eine Achse angetrieben. Es gibt jedoch auch Fahrzeuge, bei denen die Allradfunktion nicht permanent gegeben, sondern zu- und abschaltbar ist.

Eine mechanische Trennung im Antriebsstrang steigert dabei insbesondere die Effizienz des Fahrzeugs und erlaubt auch eine erleichterte Verwendung von unterschiedlichen Antriebssystemen bei Hybridantrieben.

Für das Wechseln zwischen dem Antreiben nur einer Achse und dem Allradantrieb gibt es im Stand der Technik bereits mehrere Umsetzungen.

Dem Dokument WO 2010/069578 A1 lässt sich eine Kupplungsanordnung mit einem Differential entnehmen, über die eine Antriebsachse eines mehrachsgetriebenen Kraftfahrzeug zuschaltbar ist.

Die Offenlegungsschrift US 2003/0209939 A1 beschreibt eine Anordnung, über die die Kraft- und Drehmomentübertragung zu einem Rad eines Kraftfahrzeugs über eine Zahnkupplung aufhebbar ist.

Das Verteilen eines Drehmoments auf beide Achsen eines Kraftfahrzeugs wird gemäß der Offenlegungsschrift EP 0 879 728 A2 über ein Planetengetriebe und einem Doppeltrennungsmechanismus realisiert.

Die im Stand der Technik teilweise verwendeten Kupplungen gehen dabei zumeist mit einem erhöhten Bauraumbedarf und einem erhöhten Gewicht einher.

Die Offenlegungsschrift DE 10 2011 106 355 A1 offenbart ein Gelenk, welches ein Außenteil mit Kugelbahnen, ein in dem Außenteil angeordnetes Innenteil mit Kugelbahnen, einen zwischen Außenteil und Innenteil angeordneten und Fenster aufweisenden Käfig und in den Fenstern des Käfigs angeordnete Kugeln aufweist.
Die gattungsgemäße WO 02/14092 A1 sieht eine Aktorikvorrichtung vor, die eine drehmomentübertragende Verbindung zwischen dem Übertragungselement und dem Gelenk herstellt und/oder aufhebt.
Die Offenlegungsschrift DE 32 34 456 A1 sieht vor, dass für ein Aufheben der drehmomentübertragenden Verbindung das Außenteil und das Innenteil derartig relativ zueinander bewegt werden, dass die Kugeln außerhalb der Kugelbahnen des Außenteils angeordnet sind.

Der Erfindung liegt die Aufgabe zugrunde, eine Antriebsanordnung als Teil eines Antriebsstrangs vorzuschlagen, die eine Alternative zum Stand der Technik darstellt und ein Zu- bzw. Abschalten der Kraft- und/oder Drehmomentübertragung insbesondere zu einer Achse erlaubt.

Die Aufgabe wind durch eine Antriebsanordnung gemäß Anspruch 1 gelöst.

Ein Vorteil der erfindungsgemäßen Antriebsanordnung besteht insbesondere darin, dass sie auf einer Anordnung aufbaut, wie sie bereits in etlichen Fahrzeugen des Standes der Technik Verwendung findet. Dabei dienen die Gelenke in den Antriebssträngen gemäß dem Stand der Technik hauptsächlich dem Ausgleich von zueinander versetzten Abschnitten oder Komponenten des Antriebsstrangs und zusätzlich insbesondere in der Art von Verschiebegelenken auch dazu, axiale Relativbewegungen zwischen den Abschnitten des Antriebsstrangs zuzulassen. Bei der erfindungsgemäßen Antriebsanordnung sind daher keine grundlegend neuen Elemente in den Antriebsstrang einzufügen. Da nur eine gemäß dem Stand der Technik bereits bestehende Antriebsanordnung in Bezug auf die Reversibilität erweitert wird, ist entsprechend auch der Raumbedarf geringer und wird ein geringeres zusätzliches Gewicht erzeugt.

In der Erfindung wird die Anordnung zwischen dem Gelenk und einem Übertragungselement, das beispielsweise als Welle ausgestaltet ist, derartig modifiziert, dass das Übertragungselement und das Gelenk reversibel in Bezug auf die Übertragung von Kräften und/oder Drehmomenten miteinander verbindbar sind. Die Übertragung lässt sich also herstellen und wieder auflösen. Dies wiederum erlaubt es beispielsweise, eine Achse zuzuschalten oder wegzuschalten. Das Übertragungselement und das Gelenk sind daher nicht fest miteinander in Bezug auf die Übertragung von Kräften und Drehmomenten miteinander verbunden, sondern die - in einer Ausgestaltung insbesondere formschlüssige - Verbindung bzw. Übertragung wird temporär erzeugt bzw. aufgehoben.

Erfindungsgemäß ist mindestens eine Aktorikvorrichtung vorgesehen, die eine kraft- und/oder drehmomentübertragende Verbindung zwischen dem Übertragungselement und dem Gelenk herstellt und/oder aufhebt. Die zu- und wieder wegschaltbare und damit reversible Verbindung zwischen dem Übertragungselement und dem Gelenk wird in dieser Ausgestaltung über eine Aktorvorrichtung realisiert. Die Aktorvorrichtung dient dabei im Wesentlichen als eine Art von Schalter, der die Übertragung einer Kraft bzw. eines Drehmoments ein- oder ausschalten kann.

Erfindungsgemäß ist das verwendete Gelenk ein sogenanntes Verschiebegelenk. Dabei ist vorgesehen, dass das Gelenk mindestens ein Außenteil mit Kugelbahnen, ein zumindest teilweise in dem Außenteil angeordnetes Innenteil mit Kugelbahnen, einen zwischen Außenteil und Innenteil angeordneten und Fenster aufweisenden Käfig und in den Fenstern des Käfigs angeordnete Kugeln aufweist. Dabei ist in einer Variante das Gelenk als Verschiebegelenk ausgestaltet, so dass das Außenteil und das Innenteil - vor allem axial entlang einer Längsachse des Gelenks - relativ zueinander bewegbar (oder speziell: verschiebbar) sind. Die Anzahl der Kugelbahnen des Außen- und des Innenteils ist insbesondere in einer Ausgestaltung gleich, wobei sich die Kugelbahnen jeweils paarweise einander zugeordnet sind. In einer Ausgestaltung befindet sich in jedem Paar von Kugelbahnen jeweils eine Kugel in einem Fenster des (Kugel-)Käfigs. Solche Gelenke sind im Stand der Technik bereits gut bekannt.

Erfindungsgemäß hebt die Aktorikvorrichtung die kraft- und/oder drehmomentübertragende Verbindung zwischen dem Übertragungselement und dem Gelenk dadurch auf, dass die Aktorikvorrichtung das Außenteil und das Innenteil derartig relativ zueinander bewegt, dass die Kugeln außerhalb der Kugelbahnen des Außenteils und/oder außerhalb der Kugelbahnen des Innenteils angeordnet sind. Die Aktorikvorrichtung bewegt somit das Außen- und das Innenteil - indem sie entweder das Außenteil oder das Innenteil bewegt - derartig relativ zueinander, so dass die Kugeln nicht mehr in den Kugelbahnen des Außen- und des Innenteils befindlich sind. Sind die Kugeln jedoch nicht mehr in den Kugelbahnen des Außen- und/oder des Innenelements, so kann über die Kugeln auch keine Kraft- und keine Drehmomentübertragung zwischen Außen- und Innenteil mehr stattfinden.

Umgekehrt stellt die Aktorikvorrichtung die kraft- und/oder drehmomentübertragende Verbindung her, indem sie das Außenteil und das Innenteil derartig relativ zueinander bewegt, dass die Kugeln innerhalb der Kugelbahnen des Außenteils und innerhalb der Kugelbahnen des Innenteils angeordnet sind. Dabei ist diese Verbindung reversibel, d. h. wieder aufhebbar, indem eine umgekehrte, trennende Relativbewegung - insbesondere in der Art der zuvor beschriebenen Ausgestaltung - erzeugt wird. Dadurch ist ein Allradantrieb zuschaltbar und ist nicht ständig gegeben.

In einer Ausgestaltung weist die Aktorikvorrichtung mindestens eine Schiebemuffe auf. Über diese Schiebemuffe bewegt die Aktorvorrichtung das Außenteil relativ zum Innenteil.

In einer Ausgestaltung ist das Übertragungselement drehbar um eine Drehachse und das Gelenk drehbar um eine Längsachse ausgestaltet und angeordnet. Damit lassen sich im verbundenen bzw. gekoppelten Zustand eine Kraft und ein Drehmoment über das Gelenk übertragen. Für das Ein- und Ausschalten der Verbindungen und damit auch für dessen Reversibilität sind das Außenteil und das Innenteil entlang der Längsachse relativ zueinander bewegbar.

Erfindungsgemäß ist angrenzend an die Kugelbahnen des Außenteils ein Losring vorgesehen. Dabei ist in einer Variante der Losring insbesondere mit der Kontur versehen, wie sie auch das Außenteil auf seiner Innenseite aufweist. Weiterhin verschiebt die Aktorikvorrichtung für das Aufheben der kraft- und/oder drehmomentübertragenden Verbindung das Außenteil derartig relativ zum Innenteil, dass die Kugeln innerhalb des Losrings angeordnet sind. Das Innenteil bewegt sich dabei vorzugsweise nicht axial, sondern bleibt in seiner Position. Durch die relative Bewegung zwischen dem Außen- und Innenteil wandern somit die Kugeln aus den Kugelbahnen des Außenteils in die vorzugsweise Kugelbahnen aufweisende Struktur des Losrings.

In einer alternativen, nicht erfindungsgemäßen Ausgestaltung erstreckt sich anschließend an die Kugelbahnen des Innenteils eine passende Struktur eines weiteren Strukturträgers, der in dieser alternativen Ausgestaltung im nicht-verbundenen Zustand von Außen- und Innenteil die Kugeln führt bzw. hält.

Die Struktur bzw. die Konturen des Außenteils und des Losrings sind dabei insbesondere so ausgestaltet, dass sie ein Verschieben der Kugeln für das Erzeugen bzw. Aufheben der dadurch reversiblen Verbindung zwischen Übertragungselement und Gelenk erlauben.

Weist der Losring insbesondere Kugelbahnen für die Kugeln auf, so ist vorzugweise für die Herstellung der Verbindung dafür Sorge zu tragen, dass das Außenteil und der Losring keine oder nur eine geringe Drehzahldifferenz aufweisen, damit die Kugeln aus dem Losring wieder in die Kugelbahnen des Außenteils wandern können.

In einer Ausgestaltung ist der Losring in mindestens einem Lagerelement gelagert. Dient der Losring einerseits dazu, die Kugeln im unverbundenen Zustand von Übertragungselement und Gelenk zu halten, so muss auch andererseits eine Kraft- und Drehmomentverbindung zwischen dem Losring und dem Außenteil bzw. dem Übertragungselement verhindert bzw. zumindest minimiert werden. Dafür ist hier vorgesehen, dass der Losring in mindestens einem Lagerelement, beispielsweise einem Wälzlager gelagert ist. Für eine kompakte und stabile Ausgestaltung ist der Losring beispielsweise über das mindestens eine Lagerelement in einer Aussparung des Außenteils angeordnet.

In einer Ausgestaltung ist das Übertragungselement zumindest teilweise und vorzugsweise an dem dem Gelenk zugewandten Abschnitt hülsenartig ausgestaltet.

Im Einzelnen gibt es eine Vielzahl von Möglichkeiten, die erfindungsgemäße Antriebsanordnung auszugestalten und weiterzubilden. Dazu wird verwiesen einerseits auf die dem Patentanspruch 1 nachgeordneten Patentansprüche, andererseits auf die folgende Beschreibung eines Ausführungsbeispiels in Verbindung mit der Zeichnung. In der Zeichnung zeigen
Fig.1 eine schematische, im Wesentlichen die funktionalen Wirkzusammenhänge verdeutlichende Darstellung einer erfindungsgemäßen Antriebsanordnung im Schnitt in einem ersten Zustand,
Fig. 2 die Anordnung der Fig. 1 in einem zweiten Zustand und
Fig. 3 die Anordnung der Figuren 1 und 2 in dem zweiten Zustand mit einem abgewinkelten Gelenk.

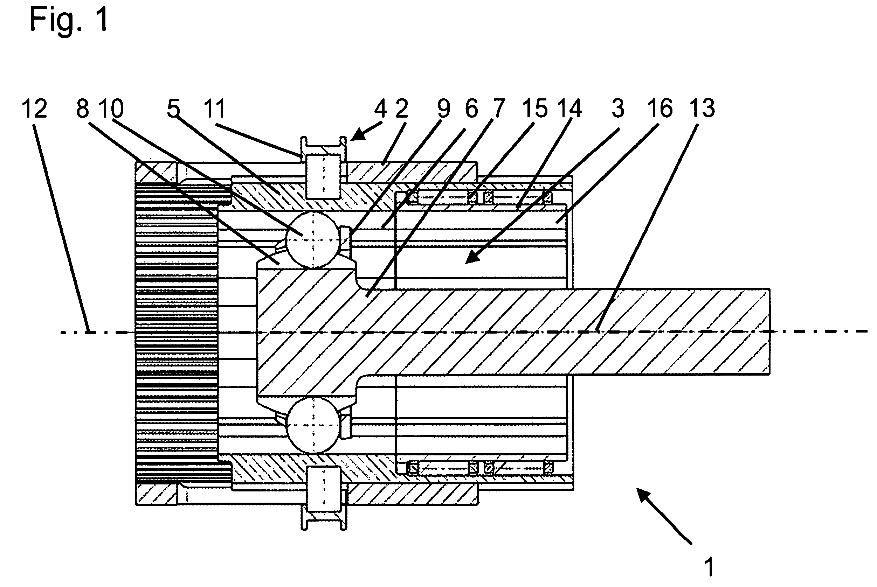

In den Fig. 1 bis 3 ist ein Ausführungsbeispiel einer erfindungsgemäßen Antriebsanordnung 1 eines Antriebsstrangs eines Fahrzeugs dargestellt. Dabei handelt es sich beispielsweise um einen Antriebsstrang in Form einer Längs- oder Seitenantriebswelle. Dabei kann die Antriebsanordnung 1 mit weiteren - hier nicht dargestellten - Komponenten wie beispielsweise Getriebeausgangswellen, Differentialaus- oder -eingangswellen, Radnaben oder dergleichen verbunden sein. Beispielsweise können auch - hier nicht dargestellte - Längenausgleichselemente vorhanden sein.

Die Antriebsanordnung 1 verfügt über ein Übertragungselement 2 und ein Gelenk 3. Das Übertragungselement 2 ist hier teilweise hülsenartig ausgestaltet und ist beispielweise Teil einer Welle, die mit einem Drehmoment eines Motors beaufschlagt wird. In einer alternativen Ausgestaltung wird von dem Übertragungselement 2 eine Kraft bzw. ein Drehmoment abgeführt. Um die Kraft- und/oder Momentenverbindung zwischen dem Übertragungselement 2 und dem Gelenk 3 zu steuern, d. h. zu erzeugen bzw. aufzuheben, ist eine Aktorikvorrichtung 4 vorgesehen.

Das Gelenk 3 ist ein sogenanntes Verschiebegelenk, das neben der Übertragung eines Drehmoments auch eine axiale Verschiebung erlaubt. Hierfür besteht das Gelenk 3 aus einem Außenteil 5, das mit Kugelbahnen 6 versehen ist, und einem Innenteil 7, in dem ebenfalls Kugelbahnen 8 eingebracht sind. Die Kugelbahnen 6, 8 des Außen- 5 bzw. Innenteils 7 sind sich jeweils paarweise zugeordnet. Zwischen dem Außen- 5 und dem Innenteil 7 befindet sich ein Käfig 9 mit Fenstern, in denen Kugeln 10 geführt werden. Die Kugeln 10 dienen der eigentlichen Kraft- und Momentenübertragung zwischen dem Außenteil 5 und dem Innenteil 7 und werden durch den Käfig 9 jeweils in einer Ebene gehalten, um ein Verklemmen des Gelenks 3 zu verhindern. In dem in der Fig. 1 gezeigten Zustand befinden sich die Kugeln 10 in den Kugelbahnen 6 des Außenteils 5 und in den Kugelbahnen 8 des Innenteils 6, so dass eine Kraft- und Drehmomentübertragung über die Kugeln 10 zwischen dem Außenteil 5 und dem Innenteil 7 des Gelenks 3 stattfindet.

Das Außenteil 5 - im Stand der Technik auch als Außennabe bezeichnet - ist über eine Schiebemuffe 11 (oder allgemein Schaltmuffe) als Teil der Aktorikvorrichtung 4 mit dem Übertragungselement 2 verbunden, so dass ein Kraft- und Drehmomentenfluss zwischen beiden stattfinden kann. Die Schiebemuffe 11 dient weiterhin dem Zweck, das Außenteil 5 relativ zum Innenteil 7 zu verschieben.

Das Übertragungselement 2 ist um eine Drehachse 12 drehbar und das Gelenk 3 um die Längsachse 13. Beide Achsen 12, 13 fallen in diesem Zustand der Kraft- und/oder Drehmomentübertragung zwischen Übertragungselement 2 und Gelenk 3 zusammen. Entlang der Längsachse 13 des Gelenks 3 sind insbesondere auch das Außenteil 5 und das Innenteil 7 relativ zueinander verschiebbar.

Durch die Schiebemuffe 11 wird das Außenteil 5 relativ zum Innenteil 7 entlang der Längsachse 12 verschoben, um den Kraft- und Momentenfluss zwischen dem Übertragungselement 2 (und damit auch mit den mit dem Übertragungselement 2 verbundenen bzw. nachgeordneten - hier nicht dargestellten - Komponenten des Antriebsstrangs) und dem Gelenk 3 bzw. den mit dem Gelenk verbundenen - hier nicht dargestellten - Komponenten zu steuern, d. h. zu unterbrechen bzw. herzustellen.

Im gezeigten Zustand sind das Außenteil 5 und das Innenteil 7 des Gelenks 3 so relativ zueinander positioniert, dass die Kugeln 10 sowohl in die Kugelbahnen 6 des Außenteils 5 als auch in die Kugelbahnen 8 des Innenteils 7 eingreifen, wodurch eine Kraft- und/oder Drehmomentübertragung stattfindet.

Angrenzend an die Kugelbahnen 6 des Außenteils 5 ist ein Losring 14 vorgesehen, der über Lagerelemente 15 (hier handelt es sich als Beispiel um Wälzlager) im Außenring 5 drehbar gelagert ist. Der Losring 14 dreht sich dabei frei um die Längsachse 13 des Gelenks 3 ohne eine Kraft- oder Drehmomentverbindung mit dem Außenteil 5. In dem Losring 14 befinden sich Strukturen 16, die den Kugelbahnen 6 des Außenteils 5 entsprechen.

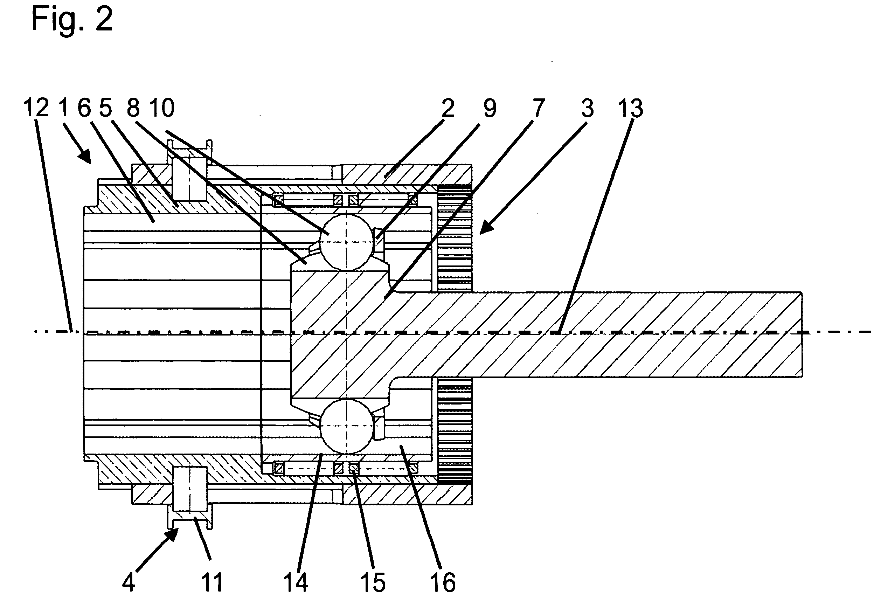

Die Abbildung Fig. 2 zeigt die Antriebsanordnung 1 der Fig. 1, nachdem durch die Aktorvorrichtung 4 das Außenteil 5 - während das Innenteil 7 axial stehen bleibt - derartig verschoben worden ist, dass die Kugeln 10 außerhalb der Kugelbahnen 6 des Außenteils 5 und in den Kugelbahnen 16 des Losrings 14 befindlich sind. Dadurch übertragen die Kugeln 10 auch keine Kraft und keine Drehmomente zwischen Außenteil 5 und Innenteil 7.

In der gezeigten beispielhaften Ausgestaltung der Antriebsanordnung 1 wird dabei bei einer Bewegung des Außenteils 5 der Losring 14 mitgeführt, wodurch die Kugeln 10 bei der Entkoppelbewegung der Schaltmuffe 11 aus den Kugelbahnen 6 des Außenteils 6 in die Bahnen 16 des Losrings 14 gelangen. Da der Losring 14 jedoch frei drehend in den Lagerelementen 15 gelagert ist, findet über die Kugeln 10 keine Kraft- oder Drehmomentübertragung zwischen Außenteil 5 und Innenteil 7 statt, so dass auch die beiden Seiten des Antriebsstrangs, zwischen denen sich das Gelenk 3 befindet, voneinander entkoppelt sind.

In einer alternativen - nicht erfindungsgemäßen und hier nicht dargestellten - Ausgestaltung wird das Innenteil 7 relativ zum Außenteil 5 bewegt, so dass die Kugeln 10 die Kugelbahnen 8 des Innenteils 7 verlassen und in einer Struktur eines passendes Träger- oder Hilfselements liegen.

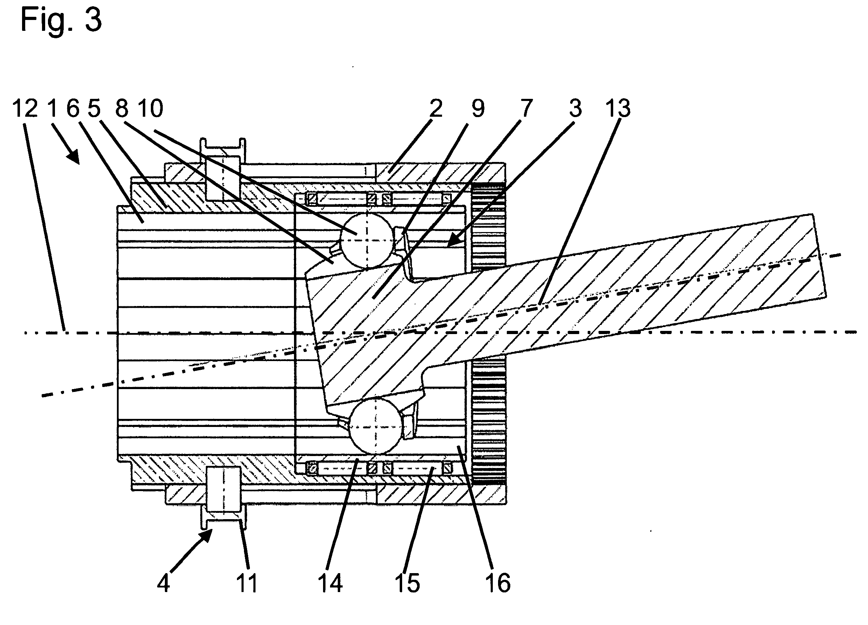

Die Fig. 3 zeigt den "entkoppelten" Zustand der Antriebsanordnung 1 der Fig. 2 mit einem gebeugten Gelenk 3 gegenüber dem gestreckten Gelenk 3 der Fig. 1 und Fig. 2. Das Innenteil 7 ist dabei gegenüber dem Außenteil 5 abgewinkelt, so dass auch die Längsachse 13 des Gelenks 3 nicht mehr mit der Drehachse 12 des Übertragungselements 2 zusammenfällt.

## Patentansprüche

1. Antriebsanordnung (1) für einen Antriebsstrang eines Fahrzeugs,
bei der mindestens ein Übertragungselement (2) zum Übertragen einer Kraft und/oder eines Drehmoments und mindestens ein Gelenk (3) vorgesehen sind,
wobei das Übertragungselement und das Gelenk reversibel kraft- und/oder drehmomentübertragend miteinander verbindbar sind,
wobei mindestens eine Aktorikvorrichtung (4) vorgesehen ist, die eine kraft- und/oder drehmomentübertragende Verbindung zwischen dem Übertragungselement und dem Gelenk herstellt und/oder aufhebt,
wobei das Gelenk mindestens ein Außenteil (5) mit Kugelbahnen (5), ein zumindest teilweise in dem Außenteil angeordnetes Innenteil (7) mit Kugelbahnen (8), einen zwischen Außenteil und Innenteil angeordneten und Fenster aufweisenden Käfig (9) und den Fenstern des Käfigs angeordnete Kugeln (10) aufweist,
**dadurch gekennzeichnet, dass**
das Außenteil (5) und das Innenteil (7) relativ zueinander bewegbar sind,
dass angrenzend an die Kugelbahnen (6) des Außenteils ein Losring (14) angeordnet ist und
dass die Aktorikvorrichtung für das Aufheben der kraft- und/oder drehmomentübertragenden Verbindung das Außenteil und das Innenteil derartig relativ zueinander verschiebt, dass die Kugeln außerhalb der Kugelbahnen (6) des Außenteils angeordnet sind und dass die Kugeln innerhalb des Losrings angeordnet sind.

2. Antriebsanordnung nach Anspruch 1, **dadurch gekennzeichnet, dass** die Aktorikvorrichtung für das Herstellen der kraft- und/oder drehmomentübertragenden Verbindung das Außenteil (5) und das Innentel (7) derartig relativ zueinander bewegt, dass die Kugeln innerhalb der Kugelbahnen des Außenteils und innerhalb der Kugelbahnen des Innenteils angeordnet sind.

3. Antriebsanordnung nach Anspruch 1 oder 2, **dadurch gekennzeichnet, dass** die Aktorikvorrichtung mindestens eine Schiebemuffe (11) aufweist, über die die Aktorikvorrichtung das Außenteil relativ zum Innenteil bewegt.

4. Antriebsanordnung nach einem der vorhergehenden Ansprüche, **dadurch gekennzeichnet, dass** das Übertragungselement (2) um eine Drehachse (12) drehbar ist, dass das Gelenk (3) um eine Längsachse (13) drehbar ist und dass das Außenteil und das Innenteil entlang der Längsachse relativ zueinander bewegbar sind.

5. Antriebsanordnung nach einem der vorhergehenden Ansprüche, **dadurch gekennzeichnet, dass** der Losring (14) in mindestens einem Lagerelement (15) gelagert ist.

## Claims

1. A drive arrangement (1) for a drive train of a vehicle,
for which at least one transmission element (2) is provided for transmitting a force and / or a torque and for which at least one joint (3) is provided, and
wherein the transmission element and the joint can be connected reversibly in a force transmitting manner and / or in a torque-transmitting manner,
wherein least one actuating device (4) is provided which performs and / or cancels a force transmitting connection and / or a torque transmitting connection between the transmission element and the joint,
wherein the joint comprises at least one outer part (5) with ball tracks (6), an inner part (7) with ball tracks (8) arranged at least partially in the outer part, a window containing cage (9) being disposed between the outer part and the inner part, and balls (10) being arranged in the windows of the cage,
**characterized in**
**that** the outer part (5) and the inner part (7) are movable relative to each other, that adjacent to the ball tracks (6) of the outer part a loose ring (14) is arranged, and
**that** the actuating device for canceling the force transmitting connection and / or the torque transmitting connection moves the outer part and the inner part in such a way relative to one another that the balls are arranged outside of the ball tracks (16) of the outer part, and that the balls are arranged inside the loose rings.

2. The drive arrangement according to claim 1, **characterized in that** the actuating device for generating the force transmitting connection and / or the torque transmitting connection moves the outer part (5) and the inner part (6) in such a way relative to one another that the balls are arranged within the ball tracks of the outer part and within the ball tracks of the inner part.

3. The drive arrangement according to claim 1 or 2, **characterized in that** the actuating device has at least one sliding sleeve (11), over which the actuating device moves the outer part relative to the inner part.

4. The drive arrangement according to any one of the preceding claims, **characterized in that** the transmission element (2) is rotatable along a rotational axis (12), that the joint (3) is rotatable along a longitudinal axis (13) and that the outer part and the inner part are movable along the longitudinal axis relative to each other.

5. The drive arrangement according to any one of the preceding claims, **characterized in that** the loose ring (14) is pivoted in at least one bearing element (15).

## Revendications

1. Ensemble d'entraînement (1) pour une chaîne cinématique d'un véhicule,
dans le cadre duquel au moins un élément de transmission (2) servant à transmettre une force et/ou un couple de rotation et au moins une articulation (3) sont prévus,
sachant que l'élément de transmission et l'articulation peuvent être reliés l'un à l'autre de manière réversible de manière à transmettre une force et/ou un couple de rotation,
sachant qu'au moins un dispositif actionneur (4) est prévu, lequel établit et/ou supprime une liaison de transmission de force et/ou de couple de rotation entre l'élément de transmission et l'articulation,
sachant que l'articulation présente au moins une partie extérieure (5) pourvue de couronnes d'orientation à billes (6), une partie intérieure (7) disposée au moins en partie dans la partie extérieure, pourvue de couronnes d'orientation à billes (8), une cage (9) disposé entre la partie extérieure et la partie intérieure et présentant des fenêtres et des billes (10) disposées dans les fenêtres de la cage,
**caractérisé en ce**
**que** la partie extérieure (5) et la partie intérieure (7) peuvent être déplacées l'une par rapport à l'autre,
en ce qu'une bague lâche (14) est disposée de manière adjacente aux couronnes d'orientation à billes (6) de la partie extérieure, et
en ce que le dispositif actionneur déplace, en vue de la suppression de la liaison de transmission de force et/ou de couple de rotation, par coulissement l'une par rapport à l'autre la partie extérieure et la partie intérieure de telle manière que les billes sont disposées à l'extérieur des couronnes d'orientation à billes (6) de la partie extérieure et que les billes sont disposées à l'intérieur de la bague lâche.

2. Ensemble d'entraînement selon la revendication 1, **caractérisé en ce que** le dispositif actionneur déplace, en vue de l'établissement de la liaison de transmission de force et/ou de couple de rotation, la partie extérieure (5) et la partie intérieure (7) l'une par rapport à l'autre de telle manière que les billes sont disposées à l'intérieur des couronnes d'orientation à billes de la partie extérieure et à l'intérieur des couronnes d'orientation à billes de la partie intérieure.

3. Ensemble d'entraînement selon la revendication 1 ou 2, **caractérisé en ce que** le dispositif actionneur présente au moins un manchon coulissant (11), par l'intermédiaire duquel le dispositif actionneur déplace la partie extérieure par rapport à la partie intérieure.

4. Ensemble d'entraînement selon l'une quelconque des revendications précédentes, **caractérisé en ce que** l'élément de transmission (2) peut tourner autour d'un axe de rotation (12), **en ce que** l'articulation (3) peut tourner autour d'un axe longitudinal (13), et **en ce que** la partie extérieure et la partie intérieure peuvent être déplacées l'une par rapport à l'autre le long de l'axe longitudinal.

5. Ensemble d'entraînement selon l'une quelconque des revendications précédentes, **caractérisé en ce que** la bague lâche (14) est montée dans au moins un élément de palier (15).
